# EUROPÄISCHE PATENTSCHRIFT

(11) **EP 3 837 451 B1**
(45) Veröffentlichungstag und Bekanntmachung des Hinweises auf die Patenterteilung: **18.10.2023**
(21) Anmeldenummer: 19739873.8
(22) Anmeldetag: 08.07.2019
(51) Int. Cl.: F16C 43/06, F16C 33/46

(54) **KEGELROLLENLAGER MIT TVP-WÄLZLAGERKÄFIG UND KIPPBAREN WÄLZKÖRPERN**
TAPERED ROLLER BEARING HAVING TVP ROLLING ELEMENT BEARING CAGE AND TILTABLE ROLLING ELEMENTS
PALIER À ROULEAUX CONIQUES À CAGE DE ROULEMENT À ROULEAUX TVP ET ÉLÉMENTS ROULANTS INCLINABLES

(30) Priorität: 14.08.2018 DE 102018119738
(43) Veröffentlichungstag der Anmeldung: 23.06.2021
(73) Patentinhaber: Schaeffler Technologies AG & Co. KG, 91074 Herzogenaurach (DE)
(72) Erfinder: FULL, Walter, 97493 Bergrheinfeld (DE); BARTHEL, Bernd, 97508 Grettstadt (DE)
(86) Internationale Anmeldenummer: PCT/DE2019/100636
(87) Internationale Veröffentlichungsnummer: WO 2020/035103

(56) Entgegenhaltungen:
- EP-A2- 1 757 823
- DE-A1- 3 524 063
- DE-A1- 19 833 436
- DE-A1-102007 019 917
- DE-A1-102014 205 051
- DE-U1- 20 005 228
- DE-U1- 29 504 069
- JP-A- 2007 057 044
- JP-A- 2007 321 940

## Beschreibung

Die Erfindung betrifft eine Wälzlagereinheit, die in Radlagerungen von Fahrzeugen einsetzbar ist, bestehend aus zumindest einem Kegelrollenlager, das einen Außenring und einen Innenring umfasst, zwischen denen in Käfigtaschen eines Wälzkörperkäfigs eingesetzte, als Kegelrollen ausgebildete Wälzkörper angeordnet sind, die an Halteborden der Lagerringe geführt sind, wobei jede Käfigtasche von endseitigen Käfigborden sowie von zwischen den Käfigborden verlaufenden Längsstegen des Wälzkörperkäfigs begrenzt ist. Weiterhin betrifft die Erfindung ein Verfahren zur Montage von einem Kegelrollenlager einer Wälzlagereinheit.

Aus dem Stand der Technik ist eine Vielzahl von Kegelrollenlagern bekannt, die im Allgemeinen so aufgebaut sind, dass deren Innenring zwei radial nach außen abstehende Halteborde aufweist und der Außenring ohne Borde ausgebildet ist. Der aus den Kegelrollen und dem Wälzkörperkäfig gebildete Rollensatz ist dabei an den Halteborden des Innenrings geführt. Die massiven Halteborde des Innenrings haben die Aufgabe, die auf das Kegelrollenlager wirkenden Axialkräfte aufzunehmen.

Die DE 10 2014 205 051 A1 sowie die DE 10 2006 057 512 A1 zeigen beispielhaft Wälzlagerkäfige, in denen als Kegelrollen ausgebildete Wälzkörper geführt sind. Für Kegelrollenlager werden bevorzugt als Fensterkäfig ausgeführte Wälzkörperkäfige eingesetzt, in denen die Kegelrollen eingesetzt und geführt sind. Der auch TVP-Käfig genannte Fensterkäfig schließt zwei axial zueinander angeordnete Käfigborde ein, die durch beabstandete Stege verbunden sind. Die Käfigborde zusammen mit den Stegen bilden Wälzkörpertaschen, in denen die Wälzkörper aufgenommen sind. Derartig aufgebaute Wälzkörperkäfige für Kegelrollenlager sind beispielsweise aus der DE 27 39 367 A1 und der DE 10 2016 210 331 A1 bekannt. Ein Wälzlagerkäfig ist bevorzugt an dem inneren Lagerring oder dem äußeren Lagerring des Wälzlagers geführt.

Die DE 35 24 063 A1 zeigt eine Wälzlagereinheit gemäß dem Oberbegriff von Anspruch 1.

Der Erfindung liegt die Aufgabe zugrunde, einen einfach aufgebauten, kostengünstig herstellbaren Wälzlagerkäfig mit einer verbesserten Funktionalität für ein Kegelrollenlager zu entwickeln, der eine beschädigungsfreie, vereinfachte Montage der Kegelrollen ermöglicht.

Diese Aufgabe wird durch einen Wälzkörperkäfig mit den Merkmalen des Anspruchs 1 sowie durch ein Verfahren gemäß Anspruch 8 gelöst. Vorteilhafte Weiterbildungen sind in den abhängigen Ansprüchen definiert.

Erfindungsgemäß ist vorgesehen, dass zur Montagehilfe der Kegelrollen die Längsstege des Wälzkörperkäfigs an zugewandten Innenseiten eine Fase aufweisen, die jeweils von dem durchmessergrößeren Käfigbord ausgehend sich über die gesamte Länge der Längsstege erstreckt und sich dabei kontinuierlich vergrößert.

Diese auch als Abschrägung, Aussparung oder Tasche zu bezeichnende Fase an den Längsstegen ermöglicht bei der Montage, dem Zusammenfügen von dem inneren Lagerring und dem aus den Kegelrollen und dem Wälzlagerkäfig bestehenden Rollenkranz vorteilhaft ein begrenztes, auch Verschwenken genanntes Kippen der Kegelrolle radial nach außen. Das Kippen der Kegelrolle erfolgt dabei ausgehend von dem durchmessergrößeren Käfigbord.

Um eine gewünschte innere Befüllung des Wälzkörperkäfigs zu erreichen, wurden bisher die Kegelrollen mit einer erhöhten Radialluft im Wälzkörperkäfig angeordnet. Diese Auslegung führte bei der Montage jedoch häufig zu Störungen, einem Auseinanderfallen von dem Rollenkranz. Zur Vermeidung dieses Nachteils wurden die Wälzkörperkäfige von außen befüllt, wodurch sich die Montagekosten erhöhten.

Mit dieser erfindungsgemäßen Maßnahme vergrößert sich ein Hüllkreisdurchmesser der Kegelrollen, der eine zu große maßliche Überdeckung gegenüber einem Halteborddurchmesser des inneren Lagerrings vermeidet. Damit bietet die Erfindung die Möglichkeit, bei einer unveränderten, für die Lagerfunktion optimalen, auf max. 1 mm ausgelegten Radialluft den Wälzlagerkäfig von innen mit Kegelrollen zu befüllen. Gleichzeitig werden durch die erfindungsgemäße Maßnahme wirksam Beschädigungen an den Kegelrollen und dem Innenring verhindert.

Die gemäß der Erfindung vorgenommene, eine Einführhilfe oder Montagehilfe bildende Modifikation der Längsstege umfasst einfache und kostengünstig herstellbare Fasen in der Käfigtasche des Wälzkörperkäfigs, die von dem durchmessergrößeren Käfigbord ausgehend sich bis zu dem durchmesserkleineren Käfigbord stetig vergrößern. Mit dem erfindungsgemäßen Wälzlagerkäfig wird eine automatisierte und folglich schnelle, kostengünstige Montage von Kegelrollenlagern ermöglicht, wobei der Wälzkörperkäfig von innen mit einem Hub befüllbar ist.

Erfindungsgemäß ist vorgesehen, dass die zugewandten Fasen an den Längsstegen innerhalb der Käfigtasche gemeinsam eine sich mit zunehmender Länge vergrößernde konische Aufnahme für die jeweilige Kegelrolle bilden. Zur Erzielung einer optimalen Anpassung weisen die Fasen der Längsstege eine konkav ausgebildete, an die Außenkontur der Kegelrolle angepasste Kontaktfläche auf.

Die Fasen an den Längsstegen, die ein weitestgehend dreieckförmiges Querschnittsprofil aufweisen, sind vorteilhaft so gestaltet, dass bei der Montage die Kegelrolle von dem durchmessergrößeren Käfigbord ausgehend betrachtet zwischen 1° bis 4° schwenkbar ist. Mit dieser Auslegung kann ein von den Kegelrollen definierter innerer Hüllkreisdurchmesser realisiert werden, der ≤ 1 mm von einem Halteborddurchmesser des Innenrings entspricht. Gleichzeitig stellt sich dabei keine nachteilige vergrößerte Radialluft der Kegelrollen innerhalb des Wälzlagerkäfigs ein.

Die erfindungsgemäß konisch ausgeführte, den Hüllkreisdurchmesser der Kegelrollen vergrößernde Aufnahme des Wälzlagerkäfigs bietet außerdem die Möglichkeit, den Wälzkörperkäfig von innen zu befüllen. Der sich einstellende Hüllkreisdurchmesser schafft Platzverhältnisse, die eine kostenoptimierte Montage der Kegelrollen ermöglicht, wobei alle Wälzkörper gleichzeitig von innen mit einem Hub in die zugehörigen Käfigtaschen des Wälzlagerkäfigs gedrückt werden.

Das Kegelrollenlager gemäß der Erfindung ist bevorzugt für eine als Insertlagerung aufgebaute Wälzlagereinheit vorgesehen, die zwei abgedichtete und fettgeschmierte Kegelrollenlager umfasst, wobei ein Sicherungsring zwei axial geteilte innere Lagerringe verbindet und eine Dichtung die sich zwischen den Lagerringen einstellende Trennfuge abdichtet. Die Insertlagerung in Verbindung mit einem auch TVP-Fensterkäfig genannten Wälzkörperkäfig eignet sich vorzugsweise für eine LKW-Radlagerung. Bei Anwendungen in getriebenen LKW-Achsen mit abgedichteten und fettgeschmierten Wälzlagereinheiten sind zwei in der Radnabe eingesetzte Kegelrollenlager meistens spiegelbildlich angeordnet, wobei die Innenringe zueinander abgestützt, mit einem Sicherungsring fixiert und mittels einer Mitteldichtung abgedichtet sind. Vorteilhaft bildet die Insertlagerung eine auswechselbare Einheit, die mit einfachen Hilfswerkzeugen in Reparaturwerkstätten montiert und demontiert werden kann. Der sich aufgrund der erfindungsgemäßen Maßnahme vergrößernde Hüllkreisdurchmesser der Kegelrollen ermöglicht dabei die Montage von dem aus Kegelrollen und Wälzkörperkäfig bestehenden Rollenkranz über größere Halteborddurchmesser des Innenrings. Die Innenringe von Insertlagern benötigen aus Festigkeitsgründen vergrößerte Querschnitte, da diese mit einer Verspannkraft ≥ 30 KN eingesetzt sind.

Der erfindungsgemäß aufgebaute Wälzlagerkäfig ist bevorzugt aus einem dauerfesten, flexiblen Kunststoff hergestellt. Derartige Kunststoffe haben den Vorteil, dass die Wälzkörper bzw. Kegelrollen mit einem geringen Kraftaufwand in die Käfigtaschen einsetzbar sind. Damit werden unzulässige mechanische Belastungen oder Beschädigungen der Kegelrollen und/oder des Wälzlagerkäfigs vermieden. Als Kunststoff eignet sich beispielsweise ein Polyamid oder eine Mischung aus Polyamid und einem Additiv, wobei ein Elastomer als Additiv vorgesehen werden kann. Alternativ zu Kunststoff ist ein aus einem metallischen Werkstoff oder einem formgepressten Sintermetall hergestellter Wälzlagerkäfig einsetzbar.

Ferner umfasst die Erfindung ein Verfahren zur Montage einer erfindungsgemäßen Wälzlagereinheit, bei dem die aufeinanderfolgenden Schritte vorgesehen sind. Zunächst werden die Käfigtaschen des bevorzugt aus einem Kunststoff gefertigten Wälzlagerkäfigs mit als Kegelrollen ausgeführten Wälzkörpern gefüllt. Im Anschluss daran wird der innere Lagerring des Kegelrollenlagers in den mit den Wälzkörpern befüllten Wälzlagerkäfig eingebracht. Dabei sind die Kegelrollen in den Käfigtaschen des Wälzlagerkäfigs begrenzt schwenkbar, um den durchmesserkleineren Haltebord des Innenrings zu überwinden, an dem die Kegelrollen nach abgeschlossener Montage verrasten.

Im Folgenden wird die Erfindung anhand von einem Ausführungsbeispiel näher beschrieben, das in mehreren Zeichnungen abgebildet ist. Die Erfindung ist jedoch nicht auf das gezeigte Ausführungsbeispiel beschränkt. Es zeigt:
- Fig. 1:: in einem Halbschnitt den Aufbau eines bekannten Kegelrollenlagers;
- Fig. 2:: eine Wälzlagereinheit mit zwei spiegelbildlich angeordneten, weitestgehend identischen Kegelrollenlagern;
- Fig. 3:: in einer vergrößerten Abbildung das Kegelrollenlager in einer Montageposition;
- Fig. 4:: einen Ausschnitt eines Wälzlagerkäfigs, der eine bisherige Gestaltung von den Längsstegen verdeutlicht;
- Fig. 5:: einen Ausschnitt eines Wälzlagerkäfigs mit erfindungsgemäß gestalteten Längsstegen;
- Fig. 6:: in einer Vorderansicht die Kegelrollenanordnung zur Verdeutlichung eines Hüllkreises;
- Fig. 7:: die Lage der Kegelrollen während einer Montage des Innenrings;
- Fig. 8:: die Lage der Kegelrollen nach erfolgter Montage des Innenrings.

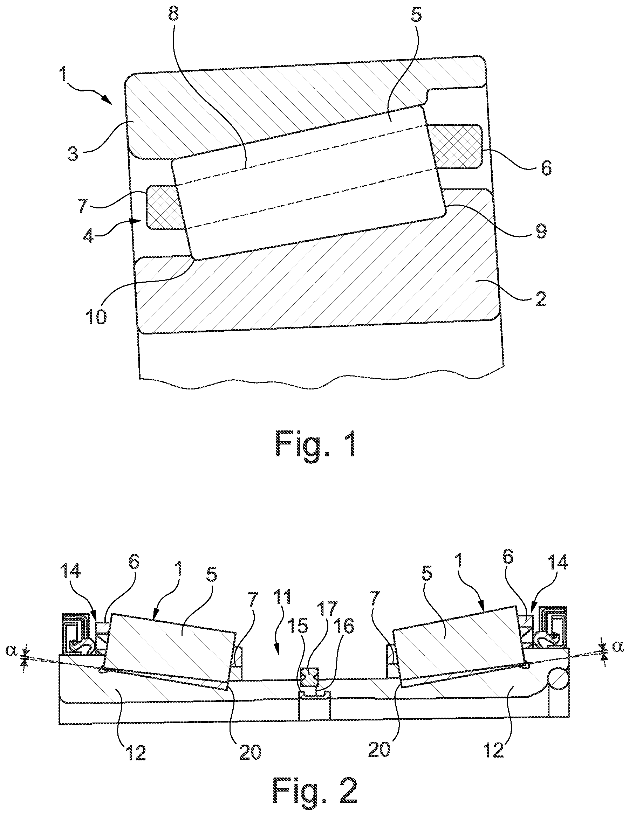

In der Fig. 1 ist der Aufbau eines bekannten Kegelrollenlagers 1 gezeigt, das einen Innenring 2 und einen Außenring 3 umfasst, zwischen denen in einem Wälzkörperkäfig 4 eingesetzte, als Kegelrollen 5 ausgeführte Wälzkörper geführt sind. Der Wälzkörperkäfig 4 schließt einen durchmessergrößeren Käfigbord 6 sowie einen durchmesserkleineren Käfigbord 7 ein, die über eine Vielzahl von Längsstegen 8 verbunden sind. Jede Kegelrolle 5 ist in einer Käfigtasche (nicht gezeigt) des Wälzkörperkäfigs 4 eingesetzt, die jeweils stirnseitig von den Käfigborden 6, 7 und beidseitig von beabstandeten Längsstegen 8 begrenzt ist. Die Kegelrollen 5 sind an Halteborden 9, 10 des Innenrings 2 geführt.

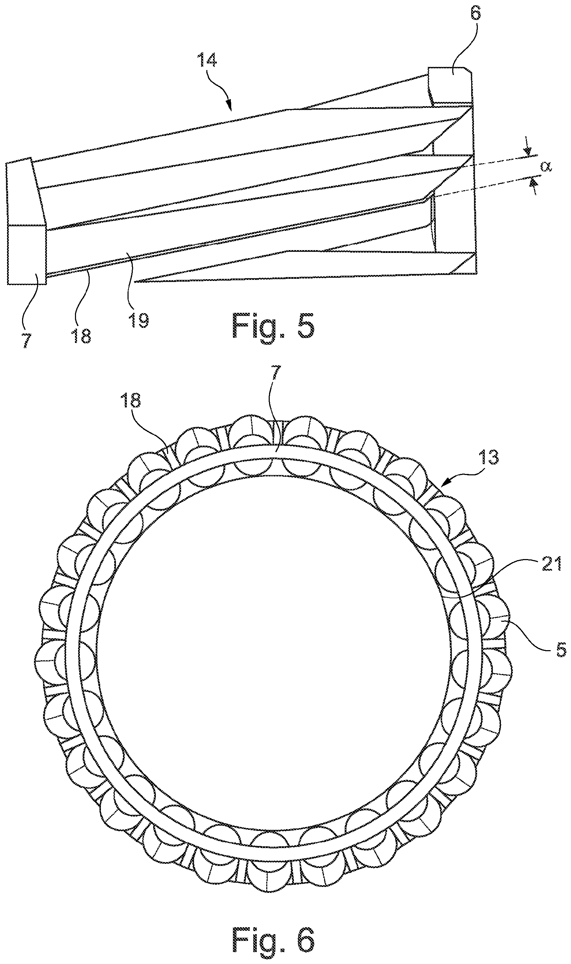

Die Fig. 2 zeigt eine auch als Insertlagerung zu bezeichnende Wälzlagereinheit 11, die zwei spiegelbildlich angeordnete, weitestgehend identisch ausgebildete Kegelrollenlager 1 umfasst, deren Innenringe 12 aneinanderstoßen. Der Innenring 12 des links angeordneten Kegelrollenlagers bildet zur Kantenkürzung in der Bohrung einen Radius. Abweichend dazu weist der Innenring 12 des rechten Kegelrollenlagers zur Abdichtung des Achszapfens einen zur Aufnahme eines O-Rings bestimmten Ringeinstich auf. Die Innenringe 12 sind im Bereich einer Trennfuge 16 über einen U-förmig gestalteten Sicherungsring 15 verbunden, der formschlüssig in korrespondierende Ringnuten der Innenringe 12 verrastet. Zur Abdichtung der Trennfuge 16 ist eine Dichtung 17 vorgesehen. Die Kegelrollen 5 beider Kegelrollenlager 1 sind dabei in einem auch TVP-Fensterkäfig genannten, die Merkmale der Erfindung aufweisenden Wälzkörperkäfig 14 eingesetzt. Jeder dieser Wälzkörperkäfige 14 weist vergleichbar dem Wälzkörperkäfig 4 einen durchmessergrößeren ersten Käfigbord 6 und einen dazu parallelen, durchmesserkleineren zweiten Käfigbord 7 auf. Diese Käfigborde 6, 7 sind durch eine Mehrzahl von Längsstegen 14 fest miteinander verbunden, die wie in Fig. 5 gezeigt speziell gestaltet sind und die wie der linken Abbildung von Fig. 2 zu entnehmen ist, ein begrenztes Kippen bzw. Schwenken der Kegelrollen 5 ermöglichen. Bei der Montage, einem axialen Einschieben des Innenrings 12 in den Wälzkörperkäfig 14 kippen die im Wälzkörperkäfig 14 eingesetzten Kegelrollen 5 um den durchmessergrößeren Käfigbord 6 radial nach außen und überwinden dabei den Haltebord 20 des Innenrings 12.

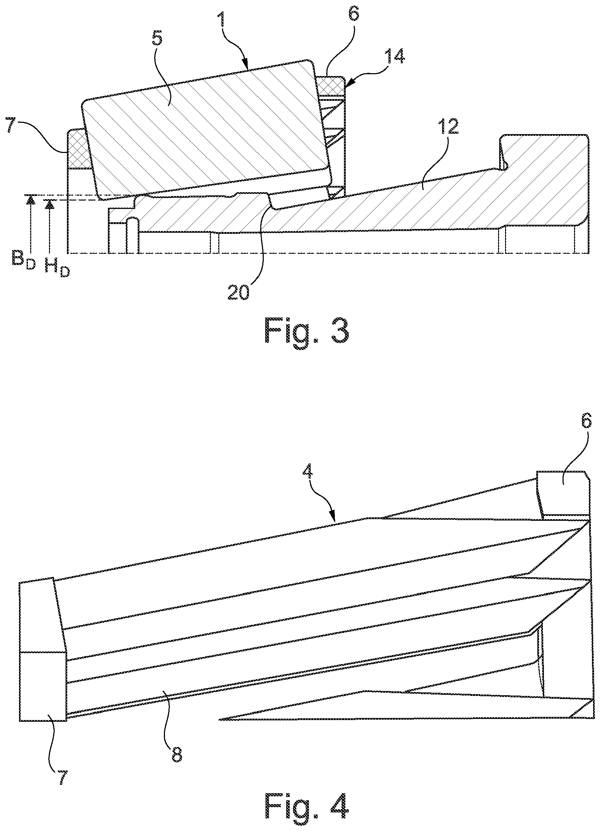

In der Fig. 3 ist das Kegelrollenlager 1 in einer Montageposition abgebildet, dessen Kegelrollen 5 kippbar sind. Aufgrund des erfindungsgemäß gestalteten Wälzkörperkäfigs 14 besitzen die Kegelrollen 5 an dem durchmesserkleineren Käfigbord 7 einen vergrößerten Freiheitsgrad. Dazu sind die Längsstege 18 des Wälzkörperkäfigs 14 so gestaltet, dass eine Montage des Innenrings 12 gewährleistet ist, wenn bei leicht anliegenden Kegelrollen 5 im Wälzkörperkäfig 14 ein Differenzmaß zwischen dem von allen Kegelrollen 5 gebildeten Hüllkreisdurchmesser H_{D} und dem Durchmesser B_{D} vom Haltebord 20 ≤ 1 mm beträgt.

Die Fig. 4 und Fig. 5 zeigen jeweils einen Ausschnitt von Wälzkörperkäfigen. In dem in Fig. 4 abgebildeten Wälzkörperkäfig 4 sind die Längsstege 8 über die gesamte Länge zwischen den Käfigborden 6, 7 unverändert parallel verlaufend angeordnet. Abweichend dazu weisen die Längsstege 18 gemäß Fig. 5 eine Fase 19 auf, die sich von dem durchmessergrößeren Käfigbord 6 bis zu dem durchmesserkleineren Käfigbord 7 kontinuierlich keilförmig vergrößert. Die auch als Ausnehmung oder Aussparung zu bezeichnende Fase 19 verläuft dabei unter einem Fasenwinkel α, der ≥ 1° bis ≤ 4 ° beträgt. Die zueinander zugewandt in der Käfigtasche des Wälzkörperkäfigs 14 angeordneten Fasen 19 bilden eine konische Aufnahme für die Kegelrollen 5.

Die Fig. 6 zeigt in einer Vorderansicht die Anordnung der Kegelrollen 5, die in dem Wälzkörperkäfig 14 angeordnet sind, zur Bildung eines Rollenkranzes 13. In Fig. 6 sind von dem Wälzkörperkäfig 14 der durchmesserkleinere Käfigbord 7 sowie die Längsstege 18 sichtbar. Alle Kegelrollen 5 gemeinsam begrenzen einen Hüllkreis 21, der weitestgehend dem Durchmesser B_{D} von dem Haltebord 7 entspricht, um eine Montage des Innenrings 12.

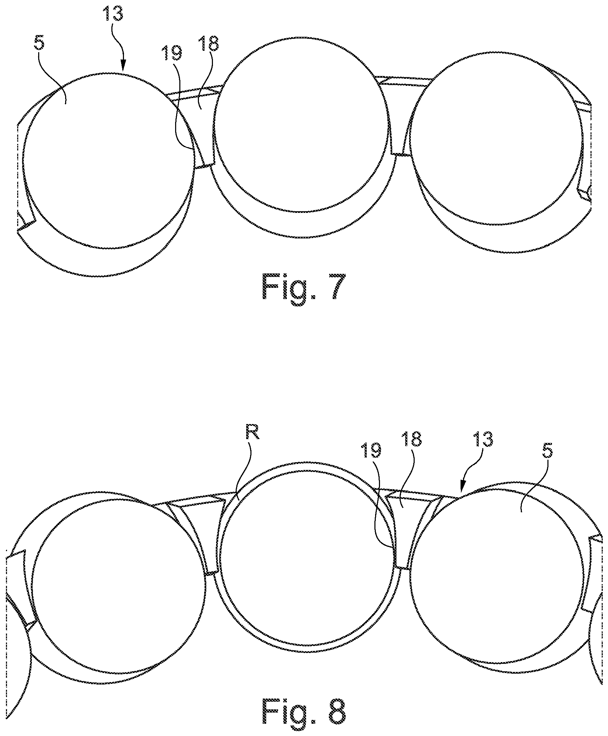

In Fig. 7 und Fig. 8 ist jeweils ein Ausschnitt von dem Rollenkranz 13 gezeigt, der aus dem Wälzlagerkäfig 14 und den Kegelrollen 5 gebildet wird. Die Darstellung gemäß Fig. 7 zeigt den Rollenkranz während der Montage des Innenrings 12. Dabei sind die radial nach außen gedrückten Kegelrollen 5 an den Fasen 19 der Längsstege 18 abgestützt, die ein weitestgehend dreieckförmiges Querschnittprofil aufweisen. Die zugewandt in der Käfigtasche des Wälzlagerkäfigs 14 angeordneten Fasen 19 bilden gemeinsam eine konische Aufnahme für die Kegelrollen 5. Erfindungsgemäß ist dabei eine konkav gestaltete Kontaktfläche der Fasen 19 einer Außenkontur der Kegelrollen 5 angepasst.

Die Fig. 8 zeigt die Kegelrollen 5 im eingebauten Zustand, bei dem die Kegelrollen 5 stirnseitig an dem Käfigbord 7 (nicht gezeigt) abgestützt und im Vergleich zu Fig. 7 radial nach innen verschoben sind. Dabei stellt sich ein auch Radialluft genanntes Radialspiel R zwischen den Längsstegen 18 bzw. deren Fasen 19 und den Kegelrollen 5 ein.

Alle in der vorstehenden Figurenbeschreibung und der Beschreibungseinleitung genannten Merkmale sind sowohl einzeln als auch in beliebiger Kombination miteinander einsetzbar. Die Erfindung wird durch die anhängigen Ansprüche definiert.

### Bezugszeichenliste

- 1: Kegelrollenlager
- 2: Innenring
- 3: Außenring
- 4: Wälzkörperkäfig
- 5: Kegelrollen
- 6: Käfigbord (groß)
- 7: Käfigbord (klein)
- 8: Längssteg
- 9: Haltebord (groß)
- 10: Haltebord (klein)
- 11: Wälzlagereinheit
- 12: Innenring
- 13: Rollenkranz
- 14: Wälzlagerkäfig
- 15: Sicherungsring
- 16: Trennfuge
- 17: Dichtung
- 18: Längssteg
- 19: Fase
- 20: Haltebord
- 21: Hüllkreis
- α: Winkel (Fase)
- B_{D}: Durchmesser (Haltebord)
- H_{D}: Durchmesser (Hüllkreis)
- R: Radialspiel

## Patentansprüche

1. Wälzlagereinheit, vorgesehen als Radlagerung eines Fahrzeugs, bestehend aus zumindest einem Kegelrollenlager (1), das einen Innenring (2) und einen Außenring (3) umfasst, zwischen denen in Käfigtaschen eines Wälzkörperkäfigs (4, 14) eingesetzte, als Kegelrollen (5) ausgebildete Wälzkörper angeordnet und an Halteborden (9, 10) der Lagerringe (2, 3) geführt sind, wobei die Käfigtaschen von endseitigen Käfigborden (6, 7) sowie zwischen den Käfigborden (6, 7) verlaufenden Längsstegen (8, 18) des Wälzkörperkäfigs (4, 14) begrenzt sind, wobei zur Montagehilfe der Kegelrollen (5) die Längsstege (18) des Wälzkörperkäfigs (14) an zugewandten Innenseiten eine Fase (19) aufweisen, die von dem durchmessergrößeren Käfigbord (6) ausgehend sich über die gesamte Länge der Längsstege (18) erstreckt und dabei kontinuierlich vergrößert, und wobei die zugewandten Fasen (19) des Wälzlagerkäfigs (14) gemeinsam eine konische Aufnahme für die Kegelrolle (5) bilden,
**dadurch gekennzeichnet, dass** eine konkav gestaltete Kontaktfläche der Fasen (19) einer Außenkontur der Kegelrollen (5) angepasst ist.

2. Wälzlagereinheit nach Anspruch 1, **dadurch gekennzeichnet, dass** die Kegelrolle (4) bei der Montage um den durchmessergrößeren Käfigbord (6) zwischen ≥ 1° bis ≤ 4° schwenkbar ist.

3. Wälzlagereinheit nach einem der vorhergehenden Ansprüche, **dadurch gekennzeichnet, dass** ein von den Kegelrollen (5) definierter, innerer Hüllkreisdurchmesser (H_{D}) ≤ 1 mm einem Halteborddurchmesser (B_{D}) des Innenrings (12) entspricht.

4. Wälzlagereinheit nach einem der vorhergehenden Ansprüche, **dadurch gekennzeichnet, dass** die Käfigtaschen des Wälzkörperkäfigs (14) von innen mit Kegelrollen (5) befüllbar sind.

5. Wälzlagereinheit nach einem der vorhergehenden Ansprüche, **dadurch gekennzeichnet, dass** die als Insert-Lagerung aufgebaute Wälzlagereinheit (11) zwei Kegelrollenlager (1) zwei axial geteilte, über einen Sicherungsring (15) verbundene Innenringe (12) umfasst, wobei eine Dichtung (17) eine Trennfuge (16) abdichtet.

6. Wälzlagereinheit nach einem der vorhergehenden Ansprüche, **dadurch gekennzeichnet, dass** die Wälzlagereinheit (11) als ein Insertlager mit einem TVP-Wälzkörperkäfig (14) für LKW Radlager vorgesehen ist.

7. Wälzlagereinheit nach einem der vorhergehenden Ansprüche, **dadurch gekennzeichnet, dass** der Wälzlagerkäfig (14) aus einem dauerfesten, flexiblen Kunststoff hergestellt ist.

8. Verfahren zur Montage einer Wälzlagereinheit nach einem der vorangehenden Ansprüche, das die aufeinanderfolgenden Schritte einschließt:
- Befüllen von Käfigtaschen des Wälzlagerkäfigs (14) von innen mit einem Hub mit als Kegelrollen (5) ausgeführten Wälzkörpern;
- Einpressen eines inneren Lagerrings (12) in den Wälzlagerkäfig (14), wobei die Kegelrollen (5) in Käfigtaschen des Wälzlagerkäfigs (14) begrenzt schwenkbar sind.

## Claims

1. A rolling bearing unit, provided as a wheel bearing arrangement of a vehicle, consisting of at least one tapered roller bearing (1) which comprises an inner ring (2) and an outer ring (3), between which rolling elements, designed as tapered rollers (5), inserted in cage pockets of a rolling element cage (4, 14) are arranged and are guided on retaining ribs (9, 10) of the bearing rings (2, 3), wherein the cage pockets are delimited by end-sided cage ribs (6, 7) and longitudinal webs (8, 18) of the rolling element cage (4, 14) extending between the cage ribs (6, 7), wherein, as an assembly aid for the tapered rollers (5), the longitudinal webs (18) of the rolling element cage (14) have, on facing inner sides, a chamfer (19) which, starting from the cage rib (6) with the larger diameter, extends over the entire length of the longitudinal webs (18) and therein continuously increases in size and wherein the facing chamfers (19) of the rolling element cage (14) jointly form a conical receptacle for the tapered roller (5), **characterized in that** a concavely shaped contact surface of the chamfers (19) is adapted to an outer contour of the tapered rollers (5).

2. The rolling bearing unit according to claim 1, **characterized in that** the tapered roller (4) is pivotable between ≥ 1° to ≤ 4° about the cage rib (6) with the larger diameter during assembly.

3. The rolling bearing unit according to any one of the preceding claims, **characterized in that** an inner enveloping circle diameter (H_{D}) ≤ 1 mm defined by the tapered rollers (5) corresponds to a retaining rib diameter (B_{D}) of the inner ring (12).

4. The rolling bearing unit according to any one of the preceding claims, **characterized in that** the cage pockets of the rolling element cage (14) can be filled from the inside with tapered rollers (5).

5. The rolling bearing unit according to any one of the preceding claims, **characterized in that** the rolling bearing unit (11), which is constructed as an insert bearing arrangement, comprises two tapered roller bearings (1) and two axially split inner rings (12) connected via a retaining ring (15), wherein a seal (17) seals a separating joint (16).

6. The rolling bearing unit according to any one of the preceding claims, **characterized in that** the rolling bearing unit (11) is provided as an insert bearing with a TVP rolling element cage (14) for truck wheel bearings.

7. The rolling bearing unit according to any one of the preceding claims, **characterized in that** the rolling element cage (14) is made of a durable, flexible plastic.

8. A method for assembling a rolling bearing unit according to any one of the preceding claims, including the following sequential steps:
- Filling of cage pockets of the rolling element cage (14) from the inside with a stroke with rolling elements designed as tapered rollers (5);
- Pressing an inner bearing ring (12) into the rolling element cage (14), wherein the tapered rollers (5) are pivotable in cage pockets of the rolling element cage (14) to a limited extent.

## Revendications

1. Unité de palier à roulement, conçu sous la forme de roulement de roue d'un véhicule, constituée d'au moins un palier à rouleaux coniques (1), lequel comprend une bague intérieure (2) et une bague extérieure (3), entre lesquelles, dans des poches de cage d'une cage de roulement à rouleaux (4, 14), des éléments roulants, conçus sous la forme de rouleaux coniques (5), sont disposés et guidés sur des bords de retenue (9, 10) des bagues de palier (2, 3), dans laquelle les poches de cage sont délimitées par des bords de cage (6, 7) d'extrémité ainsi que des nervures longitudinales (8, 18), s'étendant entre les bords de cage (6, 7), de la cage de roulement à rouleaux (4, 14), dans laquelle, pour faciliter le montage des rouleaux coniques (5), les nervures longitudinales (18) de la cage de roulement à rouleaux (14) comportent sur les faces intérieures se faisant face un chanfrein (19), lequel s'étend, à partir du bord de cage (6) présentant le diamètre supérieur, sur toute la longueur des nervures longitudinales (18) et ainsi s'élargit en continu, et dans laquelle les chanfreins (19) se faisant face de la cage de roulement à rouleaux (14) forment ensemble un logement conique pour les rouleaux coniques (5), **caractérisée en ce qu'**une surface de contact conçue concave des chanfreins (19) est ajustée à un contour extérieur des rouleaux coniques (5).

2. Unité de palier à roulement selon la revendication 1, **caractérisée en ce que** le rouleau conique (4), lors du montage, peut pivoter entre ≥ 1 ° et ≤ 4 ° autour du bord de cage (6) présentant le diamètre supérieur.

3. Unité de palier à roulement selon l'une quelconque des revendications précédentes, **caractérisée en ce qu'**un diamètre de cercle d'enveloppe intérieur (H_{D}) ≤ 1 mm défini par les rouleaux coniques (5) correspond à un diamètre de bord de retenue (B_{D}) de la bague intérieure (12).

4. Unité de palier à roulement selon l'une quelconque des revendications précédentes, **caractérisée en ce que** les poches de cage de la cage de roulement à rouleaux (14) peuvent être remplies de rouleaux coniques (5) de l'intérieur.

5. Unité de palier à roulement selon l'une quelconque des revendications précédentes, **caractérisée en ce que** l'unité de palier à roulement (11) conçue sous la forme de palier d'insert de deux paliers à rouleaux coniques (1) comprend deux bagues intérieures (12) divisées axialement, reliées au moyen d'une bague de fixation (15), dans laquelle un joint d'étanchéité (17) assure l'étanchéité d'un joint de séparation (16).

6. Unité de palier à roulement selon l'une quelconque des revendications précédentes, **caractérisée en ce que** l'unité de palier à roulement (11) est pourvue, comme palier d'insert, d'une cage de roulement à rouleaux TVP (14) pour les roulements de roue pour poids lourds.

7. Unité de palier à roulement selon l'une quelconque des revendications précédentes, **caractérisée en ce que** la cage de roulement à rouleaux (14) est fabriquée d'une matière plastique souple et durable.

8. Procédé de montage d'une unité de palier à roulement selon l'une quelconque des revendications précédentes, comprenant les étapes successives :
- de remplissage des poches de cage de la cage de roulement à rouleaux (14) de l'intérieur en une course d'éléments roulants conçus sous la forme de rouleaux coniques (5) ;
- d'enfoncement d'une bague de palier (12) intérieure dans la cage de roulement à rouleaux (14), dans lequel les rouleaux coniques (5) peuvent pivoter de manière limitée dans des poches de cage de la cage de roulement à rouleaux (14).
